# EUROPEAN PATENT APPLICATION

(11) **EP 3 106 125 A1**
(43) Date of publication of application: **21.12.2016**
(21) Application number: 15172529.8
(22) Date of filing: 17.06.2015
(51) Int. Cl.: A61C 17/16, A61C 17/34

(54) **ORAL HYGIENE IMPLEMENT AND METHOD OF ASSEMBLING AN ORAL HYGIENE IMPLEMENT**

(71) Applicant: Braun GmbH, 61476 Kronberg (DE)
(72) Inventor: Fritsch, Thomas, 61476 Kronberg/Taunus (DE); Störkel, Ulrich, 61476 Kronberg/Taunus (DE)
(74) Representative: Schneider, Stefan Michael

(57) **Abstract**

The present disclosure is about an oral hygiene implement (10), in particular a replacement brush head, that has a carrier assembly (200) mounted at a housing part (300) for movement relative to the housing part (300), which carrier assembly (200) has at least two carriers (210, 220, 230, 240) arranged with a distance to each other, and a connector element (290), in particular an elongated, shaft-like connector element that extends parallel to a longitudinal axis (L) of the oral hygiene implement, which connector (290) element is connected with the at least two carriers (210, 220, 230, 240), wherein the connector element has undercut sections (291, 292, 293, 294) provided at the locations where the carriers are connected with the connector element and the carriers are plastic injection molded parts extending around the connector element so that the carriers (210, 220, 230, 240) are each non-detachably connected with the connector element (290) by a positive fit connection. The disclosure is also concerned with a method of assembling an oral hygiene implement.

## Description

### FIELD OF THE INVENTION

The present invention is concerned with an oral hygiene implement having a carrier assembly with at least two carriers movably mounted at a housing part, in particular wherein the oral hygiene implement is a replacement brush head for an electric toothbrush. The present invention is also concerned with a method of assembling an oral hygiene implement.

### BACKGROUND OF THE INVENTION

It is known that an oral hygiene implement can comprise a carrier assembly having at least one carrier that is movably mounted at a housing of the oral hygiene implement. E.g. EP 2 335 644 B1 describes an oral cleaning section that has a carrier that is mounted for a driven wiping motion around a longitudinal axis of the oral hygiene implement.

It is also known that two carriers are movably mounted at a housing of an oral hygiene implement. E.g. EP 1 485 039 B1 describes a toothbrush head having multiple bristle carriers that are each coupled to a drive rocker.

It is an object of the present disclosure to provide an oral hygiene implement having a carrier assembly with at least two carriers that is improved over the known oral hygiene implements or at least represents an alternative.

### SUMMARY OF THE INVENTION

In accordance with one aspect there is provided an oral hygiene implement, in particular a replacement brush head, that has a carrier assembly mounted at a housing part for movement relative to the housing part, which carrier assembly has at least two carriers arranged with a distance to each other, and a connector element, in particular an elongated, shaft-like connector element that extends parallel to a longitudinal axis of the oral hygiene implement, which connector element is connected with the at least two carriers, wherein the connector element has undercut sections provided at the locations where the carriers are connected with the connector element and the carriers are plastic injection molded parts extending around the connector element so that the carriers are each non-detachably connected with the connector element by a positive fit connection.

In accordance with one aspect there is provided a method of assembling an oral hygiene implement that comprises the step of providing a carrier assembly by injection molding at least two carriers around undercut sections of a connector element so that each carrier forms a non-detachable positive-fit connection with the connector element and the carriers are arranged with a distance, the step of providing a housing part in particular by a plastic injection molding process, optionally wherein the housing part has a cavity for receiving the carrier assembly, and the step of mounting the carrier assembly at the housing part, in particular within the cavity, such that the carrier assembly is borne for movement relative to the housing part.

### BRIEF DESCRIPTION OF THE DRAWINGS

The present disclosure will be further elucidated by a detailed description of example embodiments and with reference to figures. In the figures
- Fig.1: is a depiction of an example oral hygiene device having a detachable oral hygiene implement in accordance with the present disclosure;
- Fig. 2: is a depiction of an example oral hygiene implement in accordance with the present disclosure;
- Fig. 3A: is a longitudinal cut through the oral hygiene implement shown in Fig. 2 along line A-A indicated in Fig. 2;
- Fig. 3B: is a longitudinal cut through the same oral hygiene implement but along line B-B indicated in Fig. 3A;
- Fig. 3C: is a cross-sectional cut through the oral hygiene implement shown in Fig. 3A along line C-C indicated in Fig. 3A;
- Fig. 3D: is a cross-sectional cut through the oral hygiene implement shown in Fig. 3A along line D-D indicated in Fig. 3A;
- Fig. 3E: is a cross-sectional cut through the oral hygiene implement shown in Fig. 3A along line E-E indicated in Fig. 3A;
- Fig. 4: is a depiction of the head portion of another example oral hygiene implement in accordance with the present disclosure;
- Fig. 5A: is a longitudinal cut through the example oral hygiene element shown in Fig. 4;
- Fig. 5B: is a cross sectional cut through the same oral hygiene implement as shown in Fig. 4 along line G-G indicated in Fig. 5A;
- Fig. 5C: is another cross sectional cut through the same oral hygiene implement as shown in Fig. 4 along line F-F indicated in Fig. 5A;
- Fig. 5D: is a cross-sectional depiction of a detail of a closure element being snapped on a housing part of the oral hygiene implement shown in Fig. 4; and
- Fig. 6: is a top view of an example embodiment of a carrier assembly as may be used in assembling an oral hygiene implement as shown in Fig. 2 or Fig. 4;

### DETAILED DESCRIPTION OF THE INVENTION

In accordance with the present disclosure, it is proposed to provide a carrier assembly for the above described oral hygiene implement by a plastic injection molding process in which at least two carriers arranged at a distance are each non-detachably connected with a connector element by a form-fit as each of the injection molded carriers extends around a respective undercut section of the connector element. The connector element maybe an elongated, rod-like element that in particular maybe made from metal and the undercut sections may then be crimped or otherwise deformed sections of the metal rod (even so this should not be interpreted as limiting and the undercut section of the metal rod maybe provided by grinding or by, e.g., welding a piece of metal to the rod element or by press-fitting a hub onto the rod element to thus realize an undercut section). The carriers are arranged with a distance (i.e. a gap), where this distance is measured with respect to a longitudinal direction defined by the longitudinal extension direction of the connector element (where the longitudinal extension direction of the oral hygiene implement is generally connecting a first end of the oral hygiene and a second end, which comprises the carrier assembly, and which second end is distal to the first end). Injection molding carriers onto undercut sections of a connector element is a relatively method by which complex carrier assemblies can be realized.

The term "undercut section" means a deformation of the connector element deviating from a constant shape, orientation or area of a cross-section of the connector element perpendicular to a longitudinal extension direction of the connector element. E.g. in case the connector element were a rod-shaped element generally having a circular cross-section, an undercut section may be realized by deviating at the location of the undercut section from the circular cross-section and having, e.g.a flattened cross section, as maybe achieved by crimping the connector element at the location of the undercut section. In case of a connector element having a generally flat cross section (e.g. a rectangular cross section), an undercut section may be achieved by twisting the orientation of the flat cross section by a certain angle at the location of the undercut section. The undercut section generally shall achieve that a carrier that is injection molded around the connector element at the location of the undercut section cannot be detached from the connector element without destroying the carrier. The undercut section may in particular also serve for a torque-proof fixation of the carrier at the connector element. The length of the carrier in the longitudinal extension direction of the connector element may in particular be longer than the extension length of the undercut section so that the carrier completely encompasses the undercut section and extends beyond the undercut section. E.g. as a non-limiting example, the undercut section may have a length of 1.0 mm and the carrier may have a length of 1.5 mm, where the undercut section is centrally arranged and the carrier thus extends on both side of the undercut section by 0.25 mm - even though the undercut section must generally not be located centrally with respect to the carrier. In some embodiments, the connector element has a continuously changing cross-sectional shape so that the undercut section is thus as long as the respective carrier.

The plastic injection molded carriers may not only extend around the undercut sections of the connector element, but at least one carrier may also extend around an enlarged base section of a carrier cleaning element, i.e. the carrier may not only be injection molded around an undercut section of the connector element but an enlarged base of a cleaning section, e.g. a fused end of a filament tuft, may also extend into the mold cavity when the carrier is injection molded so that the respective carrier also extends around the enlarged base of the cleaning element. Thus, in a step of injection molding of the at least two carriers onto the respective undercut sections of the connector element, carrier cleaning elements are as well connected with the carriers.

In some embodiments, at least three or at least four carriers are consecutively arranged on the connector element, where each of the carriers is arranged with a distance to its respective neighboring carrier(s).

In some embodiments, one of the at least two carriers (or three carriers, four carriers, five carriers etc.) is a front carrier that extends around an end of the connector element (i.e. the end of the connector element is embedded in the front carrier and does not extend through the front carrier). In some embodiments, at least one housing cleaning element is mounted on the housing part of the above described oral hygiene implement, which at least one housing cleaning element extends between two carriers that are arranged with a distance with respect to the longitudinal direction (i.e. the at least one housing cleaning element extends through the gap formed between the two carriers). Alternatively or additionally, at least two housing cleaning elements are mounted on the housing part and both extend between two carriers arranged with a distance with respect to the longitudinal direction and the connector element may extend between the two housing cleaning elements. It shall not be excluded that the housing part has at least one further housing cleaning element that does not extend between two carriers, but which housing cleaning element extends, e.g. from a side of the housing part. In some embodiments, the housing part has a cavity in which the carrier assembly is at least partly disposed.

In some embodiments, a closure element is connected with the housing part, which closure element extends over a portion of the connector element (i.e. the connector element then is at least partially enveloped or covered by the closure element). In some embodiments, the closure element forms at least a portion of a bearing for the connector element, in particular either the closure element forms a bearing for the connector element or the closure element and the housing together form a bearing for the connector element. Alternatively or additionally, an auxiliary cleaning element may be mounted on the closure element.

Each of the herein mentioned cleaning elements (as long as not otherwise stated) may be realized by a single plastic filament (e.g. a polyamide filament having a diameter of about 50 - 300 micrometer, even though other filament diameters are considered as well), by a tuft of at least two or more of such filaments or by an elastomeric element, e.g. an injection molded thermoplastic elastomer (TPE) element such as a gum massaging finger. Elastomeric cleaning elements may be injection molded onto a carrier or onto the housing part in an injection molding step.

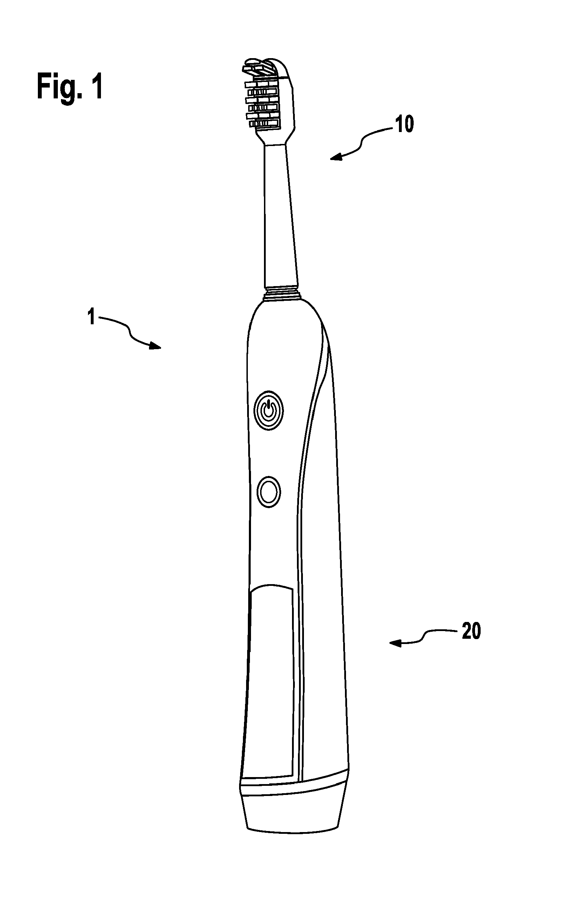

Fig. 1 is a depiction of an example embodiment of an oral hygiene device 1, here realized as an electric toothbrush. The oral hygiene device 1 generally comprises an oral hygiene implement 10 and a handle section 20. Here, the oral hygiene implement 10 is realized as a replacement brush head that may in particular be attachable to and detachable from the handle section 20. The handle section 20 may comprise a drive with a motor and a drive shaft for transferring a driving motion to the oral hygiene implement 10.

Instead of being realized as an electric toothbrush, the oral hygiene device may also be realized as a flossing device, a gum massage device, an interdental cleaning device etc. In accordance with the present disclosure, an oral hygiene implement may alternatively be realized as a (in particular detachable) head section of a flossing device, gum massaging device, interdental cleaning device etc.

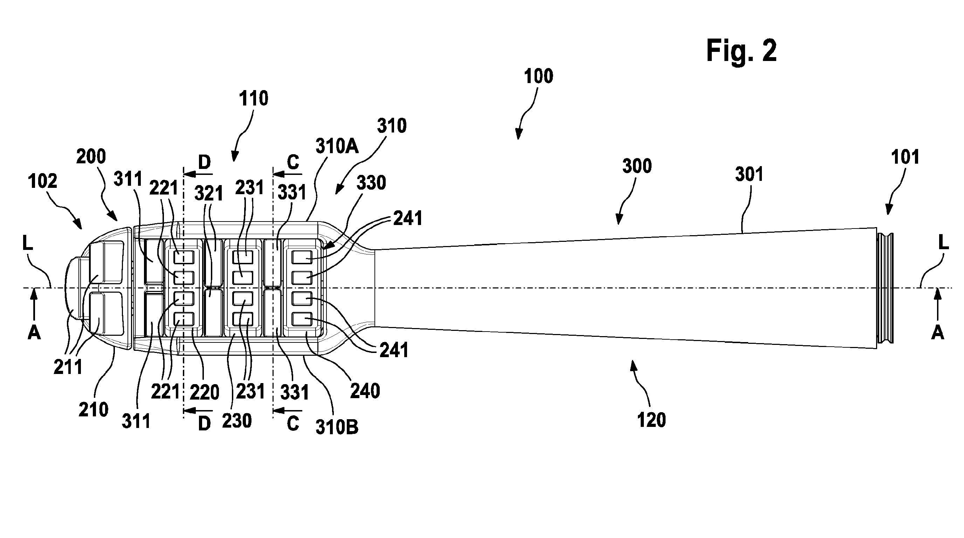

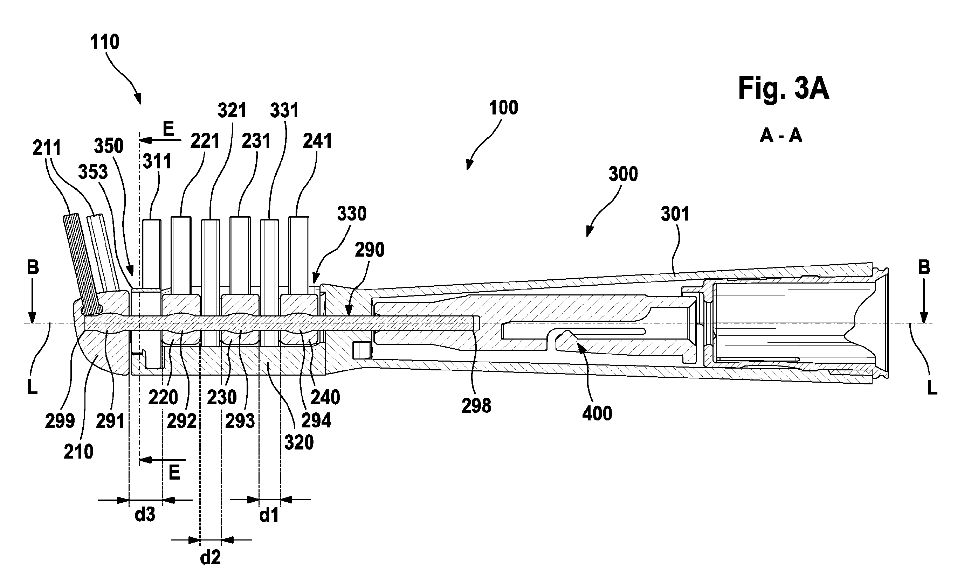

In the following, an example embodiment of an oral hygiene implement 100 is discussed with reference to Figs. 2 and 3A - 3E. Figs. 3A - 3E are sectional drawings of the oral hygiene implement 100 shown in Fig. 2. Same reference numerals are used to indicate the same features in these figures.

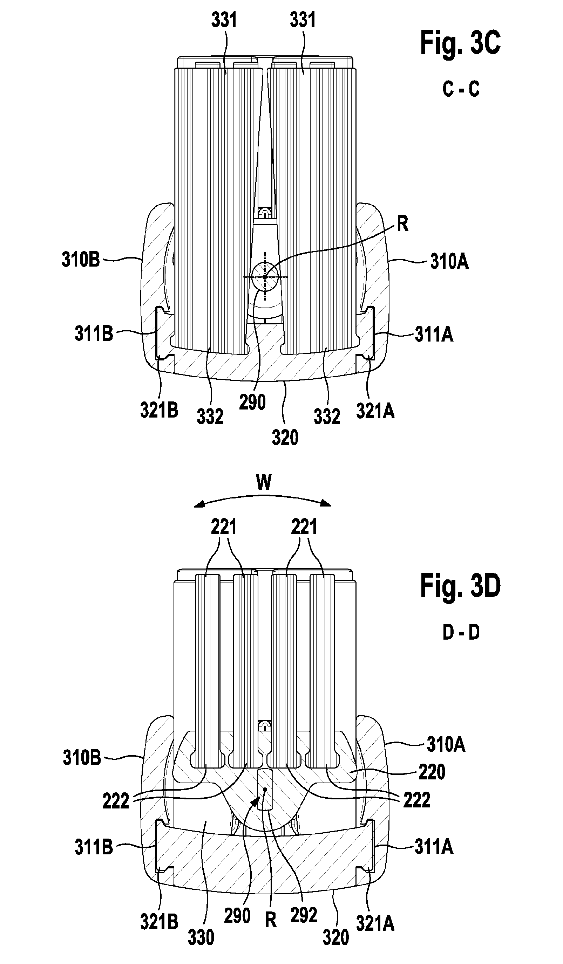

Fig. 2 is a top view onto the oral hygiene implement 100, here realized as a replacement brush head for detachable attachment to a handle section of an oral hygiene device. The oral hygiene implement 100 has a head section 110 and an attachment section 120. The oral hygiene implement 100 comprises a carrier assembly 200 mounted at a housing part 300 for driven movement. The housing 300 has a tubular portion 301 that essentially forms the outer part of the attachment section 120 and further forms a scoop-like frame 310 having side walls 310A and 310B and a bottom wall 320 (e.g. shown more clearly in Figs. 3A and 3D) that together define a cavity 330 in which the carrier assembly 200 is partly disposed. The bottom wall 320 may in particular be realized as a separate element that can be inserted (e.g. as shown in Fig. 3D) in between the side walls so that the housing part 300 is realized in the shown embodiment by two separately made parts (which obviously is an optional feature). Carrier cleaning elements 211, 221, 231, 241 such as bristle tufts or elastomeric elements are mounted on respective carriers 210, 220, 230, 240 of the carrier assembly 200 (as described in more detail with respect to Fig. 3C), even though the shown embodiment is considered as non-limiting and the number of carrier cleaning elements per carrier can be freely chosen and may even be zero. The four carriers 210, 220, 230, 240 of the shown embodiment are mounted with a distance to each other with respect to a longitudinal direction L (see also description of Fig. 3A concerning the distances). The longitudinal direction L coincides with the longitudinal extension direction of the oral hygiene implement 100 and with the longitudinal extension direction of the mounted connector element 290 (better seen in Fig. 3A). The oral hygiene implement 100 generally extends in the longitudinal direction L that connects a first end 101 (the attachment end) and a second end 102 (the treatment end) of the oral hygiene implement 100. Housing cleaning elements 311, 321, 331 are shown, which are mounted at the housing part, in particular at the bottom wall 320 (as described in more detail with respect to Fig. 3D) and here pairs of these housing cleaning elements 311, 321, 331 extend between neighboring pair of carriers 220, 230, and 240, e.g. housing cleaning elements 321 extend between carriers 220 and 230 and housing cleaning elements 331 extend between carriers 230 and 240. The carrier 210 that is here defining the second end 102 of the oral hygiene implement 100 is here realized as a front carrier.

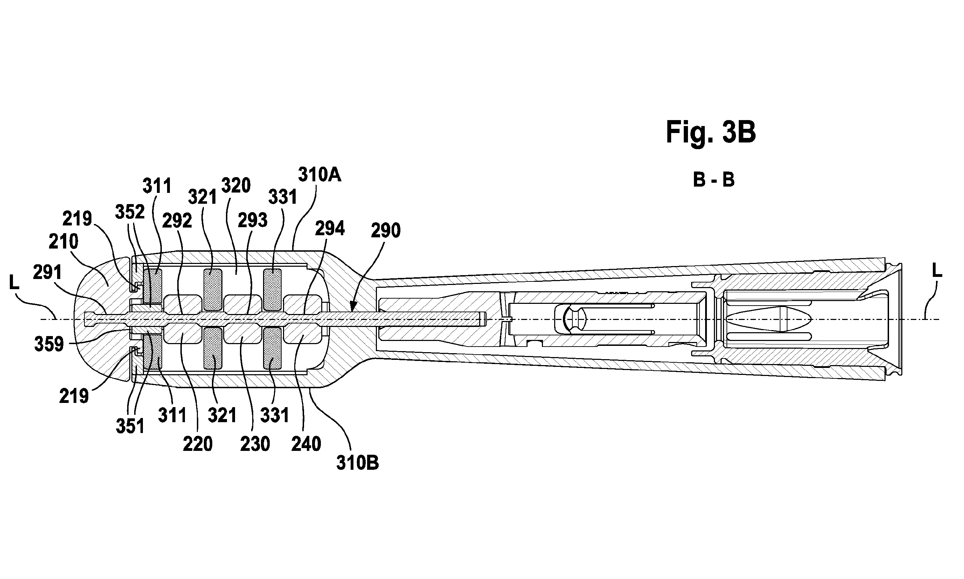

Fig. 3A is a longitudinal cut through the oral hygiene implement 100 shown in Fig. 2 along line A-A indicated in Fig. 2. As mentioned before, the carrier assembly 200 shown here has four carriers 210, 220, 230, and 240 that are consecutively arranged with respect to the longitudinal direction L and that are arranged with a distance in longitudinal direction L to their respective carrier neighbor(s). The distance (or gap width) between the carriers 230 and 240 is d1 and is identical to the distance d2 between the carriers 220 and 230. A distance d3 between the carrier 210, which is here realized as a front carrier, and the carrier 220 is larger than distances d1 or d2. This example is non-limiting and generally the distances between carriers maybe identical or different to each other. Depending on the design of the carriers, the gap width between neighboring carriers may also be non-uniform and may thus have a minimum and a maximum gap width. A constant gap width may be chosen if housing cleaning elements extend between two neighboring carriers. The carriers 210, 220, 230, and 240 are each connected with a connector element 290, which connector element 290 may be realized as a connector rod, in particular as a metal connector rod. The connector element 290 here has four undercut sections 291, 292, 293, and 294 and each of the four carriers 210, 220, 230, and 240 is provided around one of the four undercut sections 291, 292, 293, and 294 such that the respective carrier extends around a respective undercut section to form a non-detachable positive-fit connection. In the plane of the longitudinal cut shown in Fig. 3A, the undercut sections 291 to 294 are formed by an enlarged diameter of the here rod-shaped connector element (and by a corresponding thinning of the connector element in a direction perpendicular to the shown longitudinal cut, as can be seen in Fig. 3B).

In general, the carrier assembly has at least two carriers that are arranged with a distance in longitudinal direction, but embodiments with at least three, at least four (as discussed) or even more carriers such as five, six etc. are considered as well.

The four carrier elements 210, 220, 230, and 240 of the shown example embodiment are made by a plastic injection molding process (as will be explained further below, at least one of the carrier elements may additionally also extend around an enlarged base of a carrier cleaning element). The first carrier 210 is here realized as a front carrier, i.e. the front carrier extends around an end 299 of the connector element 290. In other embodiments, the connector element extends through all carriers and the respective end 299 of the connector element may then be borne for driven motion of the carrier assembly.

As can be seen in Fig. 3A, the housing cleaning elements 311, 321, 331 are mounted at the housing part. In the shown embodiment and with reference also to Fig. 2, in each case two of the housing cleaning elements 311, 321 or 331 are respectively arranged in a row perpendicular to the longitudinal direction L. Here, the housing cleaning elements 311, 321, 331 are mounted on an inner surface of the bottom wall 320 so that the housing cleaning elements 311, 321, 331 extend from the bottom wall 320 through the cavity 330. Housing cleaning elements 331 are extending between the two carriers 230 and 240, housing cleaning element 321 extend between carriers 220 and 230, and housing cleaning element 311 essentially extend between carriers 210 and 220. The width of the housing cleaning elements 321 and 331 in longitudinal direction L is about the distance d1 = d2 between the neighboring carriers 220 and 230 and 230 and 240. Thus, a dense field of carrier cleaning elements 221, 231, 241 and housing cleaning elements 311, 321, 331 can be achieved. The distance d1, d2 between neighboring carriers may be set to be at least 0.5 mm, optionally at least 0.8 mm. The distance between neighboring carriers maybe set to be up to 5 mm, in particular up to 2 mm, and further in particular up to 1.5 mm. In one example, the width of at least one of the housing cleaning elements realized as a filament tuft is 0.8 mm and thus the gap width (distance) of the neighboring carriers between which the housing cleaning element extends is chosen to be 0.8 mm plus two times a security distance of between 0.1 to 0.3 mm, so that the distance is thus in a range of between 1.0 mm and 1.4 mm. In another example, and least one of the housing cleaning elements is realized as an elastomeric element having a width of 0.4 mm and the gap width (distance) between the respective carriers may then be chosen to be 0.6 mm. Further examples lie within the routine discretion of the skilled person.

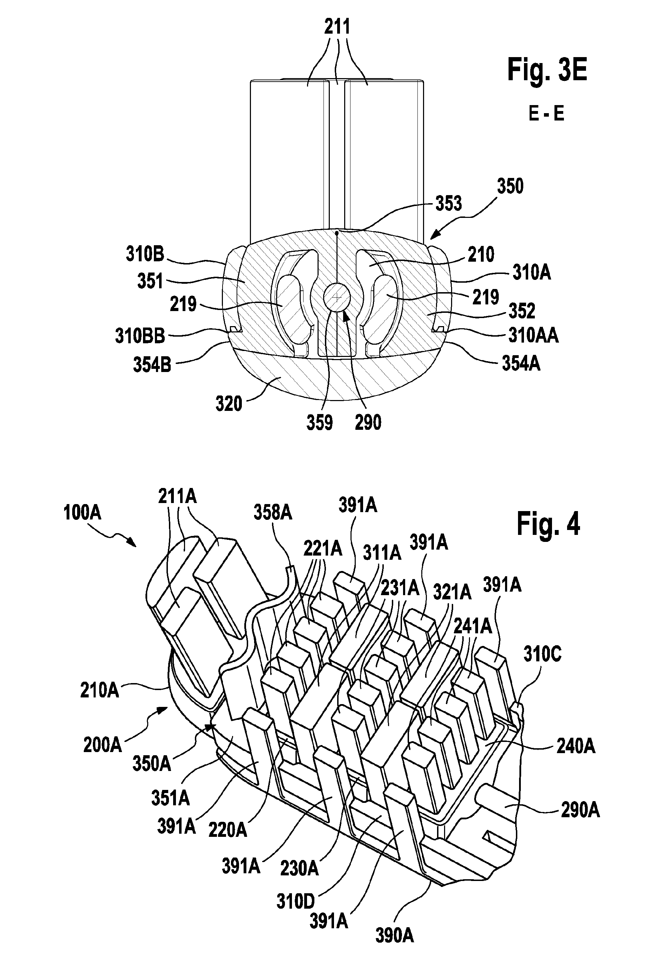

In the shown embodiment, the connector element 290 extends between each of the pairs of housing cleaning elements 311, 321, and 331, i.e. the respective housing cleaning elements are arranged at the sides of the connector element. E.g. in the shown embodiment, the housing cleaning elements of each row may be arranged with a distance allowing the connector element to extend between the two housing cleaning elements without the need to push the housing cleaning elements to the side. As shown in Fig. 3D for the carrier cleaning elements 221, at least one of the housing cleaning elements 311, 321, 331 may have an enlarged base that is enclosed in the material of the bottom wall 320. The bottom wall 320 may have been made in a plastic injection molding step in which the enlarged bases of the housing cleaning elements extended into the mold cavity and were enclosed by the injection molded plastic material. In other embodiments, the housing cleaning elements were directly connected with the housing part, either in a plastic injection molding step as just described or by a standard anchor tufting process. The housing cleaning elements may also be realized as injection molded elastomeric cleaning elements that may be connected with the housing part by an additional injection molding step. Further housing cleaning elements may as well be present, e.g. in some embodiments, elastomeric cleaning elements may have been disposed on the side walls 310A, 310B or other portions of the housing part 300 (as depicted in Fig. 4).

The connector element 290 is here also borne by a bearing 309 formed in the housing part 300. An end 298 of the connector element 290 may have been press-fitted into a motion transmitter element 400 that is arranged to receive a drive shaft from a handle section of an oral hygiene device. Thus, a motion from a motor of the handle section can be transferred via the drive shaft to the motion transmitter 400 and then to the connector element 290, so that, e.g., an oscillating wiping motion of the carriers 210, 220, 230, and 240 around the longitudinal center axis of the connector element 290 is achieved.

In the example embodiment, also an optional closure element 350 is shown, which closure element 350 envelopes a portion of the connector element 290 and, as can also be seen in Figs. 3B and 3E, forms a bearing 359 for the connector element 290. With reference to Fig. 3B and 3E, the closure element 350 here comprises two wing sections 351 and 352 that are hinged together by a hinge section 353. In the mounted state, the two wing sections 351 and 352 together define a bearing 359 for the connector element 290. While not shown for the present example embodiment, at least one auxiliary cleaning element may be mounted at the closure element 350.

Fig. 3B is a longitudinal cut through the oral hygiene implement 100 shown in Fig. 2 along line B-B indicated in Fig. 3A. As has already been described, it can be seen that the undercut sections 291, 292, 293, and 294 are formed by a narrowing of the diameter of the rod element 290 in the plane of the cut shown in Fig. 3B. The carriers 210, 220, 230, and 240 are each formed around one of the undercut sections 291, 292, 293, and 294, respectively, of the connector element 290. The wing sections 351 and 352 of the closure element 350 form a tubular bearing 359 for the connector element 290. In cases where the connector element is made from metal, the closure element may in particular be made from a plastic material that has a low friction coefficient with respect to the metal material of the connector element and generally the material of the closure element maybe chosen to have a low friction (and potentially self-lubricating properties) with respect to the material of the connector element 290. In some embodiments, the closure element 350 may at least in the area of the bearing 359 be coated with a material that has a low friction coefficient with respect to the material of the connector element (and additionally or alternatively, a coating that has a good wear resistance), e.g. the closure element 350 may have a Teflon coating at least on the contact surfaces of the bearing 359.

Fig. 3C is a cross-sectional cut through the oral hygiene implement 100 shown in Fig. 2 along line C-C indicated in Fig. 2. The cross-sectional cut extends through the bottom wall 320 and the housing cleaning elements 331. In the shown embodiment, the two housing cleaning elements 331 are mounted on the bottom wall 320. Here, the housing cleaning elements 331 each have an enlarged base 332 (e.g. generated by fusing a tuft of plastic filaments made from a fusible plastic material such as polyamide - e.g. PA6 - under the application of heat so that the filament ends melt and form a blob). As previously explained, the bottom wall 320 maybe made in a plastic injection molding step (either as an element separate from the remainder of the housing part 300 or as an integral portion of the housing part 300). The expanded bases 332 of the housing cleaning elements 331 may thus extend into a cavity into which the plastic material to form the bottom wall 320 is injected so that the enlarged bases 332 of the housing cleaning elements 331 become non-detachably enclosed in the plastic material of the carrier 220.

In the shown embodiment, the sidewalls 310A and 310B and the bottom wall 320 have matched longitudinally extending projections and depressions that are here realized by dovetail-shaped projections 321A and 321B of the bottom wall 320 that are in form-fit connection with depressions 311A and 311B realized in the side walls 310A and 310B, respectively. Thus, the here separate bottom wall 320 can be slid into the U-shaped fork formed by the side-walls 310A and 310B to form the scoop-like frame 310. The bottom wall 320, when made as a separate element, may comprise a snap connector element for snapping the bottom wall 320 to a snap partner at the housing part 300, where this snap connection may in particular be non-detachable.

Fig. 3D is a cross-sectional cut through the oral hygiene implement 100 shown in Fig. 2 along line D-D indicated in Fig. 2. The cross-sectional cut extends through the carrier 220 and the carrier cleaning elements 221. In the shown embodiment, the four carrier cleaning elements 221 are mounted on the carrier 220. Here, the carrier cleaning elements 221 each have an enlarged base 222 (e.g. generated by fusing a tuft of plastic filaments made from a fusible plastic material such as polyamide - e.g. PA6 - under the application of heat so that the filament ends melt and form a blob). As previously explained, the carrier 220 maybe made in a plastic injection molding step. The expanded bases 222 of the carrier cleaning elements 221 and the undercut section 292 of the connector element 290 may thus extend into a cavity into which the plastic material to form the carrier 220 is injected so that the undercut section 292 and the enlarged bases 222 are non-detachably enclosed in the plastic material of the carrier 220. The carrier 220 (together with the whole carrier assembly) is here mounted for a wiping motion (i.e. an oscillatory rotation) indicated by double arrow W around rotation axis R, where the rotation axis R may coincide with the longitudinal direction L or may at least be parallel to the longitudinal direction L.

Fig. 3E is a cross-sectional cut through the oral hygiene implement 100 shown in Fig. 2 along line E-E indicated in Fig. 3A. The cross-sectional cut extends through the closure element 350. In the shown embodiment, the closure element 350 provides a bearing 359 for the connector element 290. The closure element 350 may comprise, as already discussed, two wing sections 351 and 352 that are connected only via a flexible hinge section 353 (e.g. realized as a living hinge) so that the two wing sections 351, 352 can be bend apart and can then be snapped over the connector element 290. After assembly of the shown example embodiment, the wing sections 351, 352 of the closure element 350 will then be held in place by the side walls 310A, 310B of the housing part 300 via matched mating partners 354A, 354B and 310AA, 310BB realized at the wing sections 351, 352 and at the side walls 310A, 310B, respectively. The carrier 210 may have projections 219 around which the closure element 350 extends, and which projections 219 engage behind the mounted closure element 350 as can be seen in Fig. 3B. In an assembly process, the carrier assembly 200 together with the closure element 350 mounted around the connector element 350 and together with the here separate bottom wall 320 may together be slid into the fork formed by the side walls 310A, 310B.

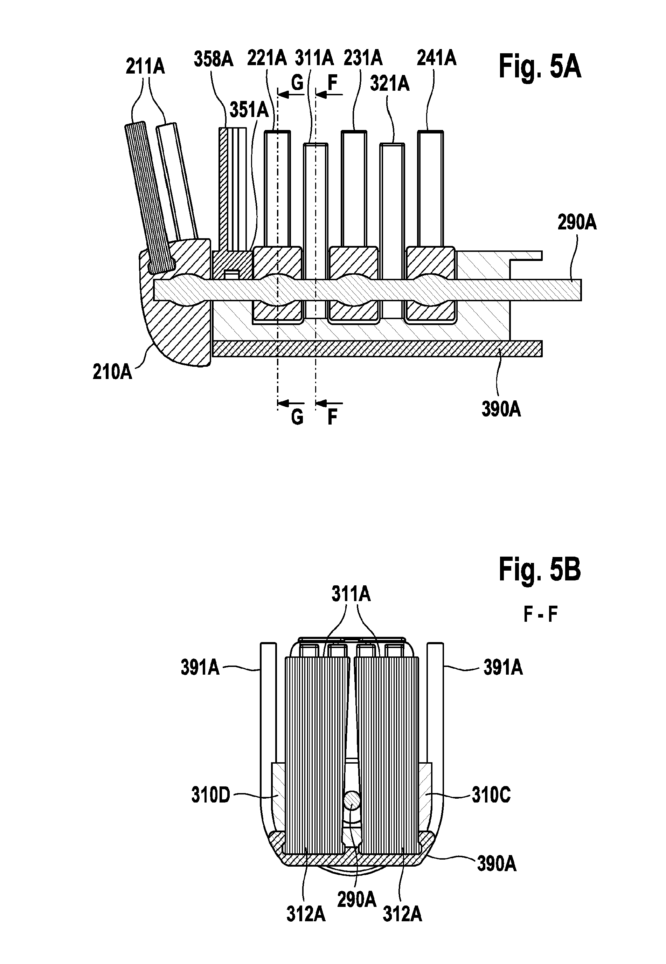

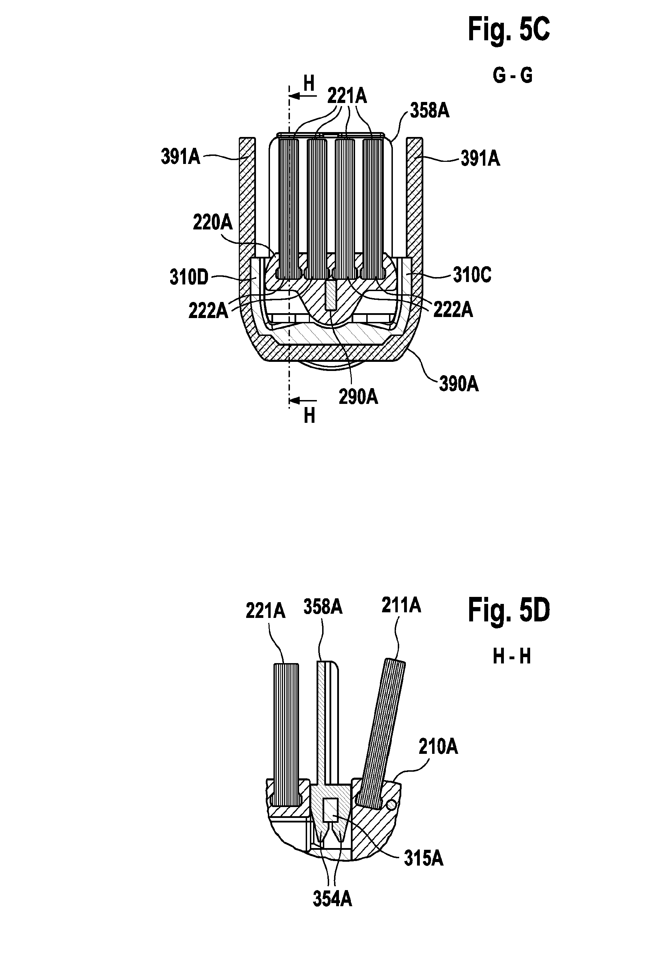

Fig. 4 is a schematic depiction of a front section of another example embodiment of an oral hygiene implement 100A in accordance with the present disclosure. Figs. 5A, 5B, 5C, and 5D show sectional cuts through the oral hygiene implement 100A. Identical features in Figs. 4, 5A, 5B, 5C, and 5D are identified by same reference numerals. In the following, reference is made to all Figs. 4, 5A, 5B, 5C and 5D, where one of the figures maybe highlighted in the description of a particular feature. Fig. 5A is a longitudinal cut through the oral hygiene element 100A shown in Fig. 4, which cut extends centrally through the longitudinally extending connector element 290A. Fig. 5B is a cross sectional cut through the oral hygiene implement shown in Fig. 4 through a plane indicated by line F-F shown in Fig. 5A. Fig. 5C is a cross sectional cut through the oral hygiene implement shown in Fig. 4 through a plane indicated by line G-G shown in Fig. 5A. Fig. 5D is a detail of a longitudinal cut extending along a plane indicated by line H-H shown in Fig. 5C.

The embodiment shown in Figs. 4, 5A, 5B, and 5C is similar to the embodiment shown in Fig. 2, namely in that the oral hygiene implement 100A has a carrier assembly 200A comprising four carriers 210A, 220A, 230A, and 240A that are arranged at locations of undercut sections 291A, 292A, 293A, and 294A (see Fig. 5A) of a connector element 290A. The carrier assembly 200A is partly disposed in a scoop-like cavity 330 formed by side walls 310C and 310D and a bottom wall 320A of a housing part 300A. One difference to the previous example embodiment is that the bottom wall 320A has an outer layer 390A made from an elastomeric material, which outer layer 390A may serve to protect soft tissue from contact with hard plastic material. In some embodiments, the outer layer 390A is textured. Then the outer layer 390A maybe used as a tongue scraper. Additionally or alternatively, at least one elastomeric housing cleaning element 391A may be provided, which elastomeric housing cleaning element 391A may in particular be made from the same elastomeric material (and optionally also be made in the same injection molding step) as the outer layer 390A. The elastomeric housing cleaning element 391A may in particular be provided at a side wall 310C, 310D of the housing part 300A and the elastomeric housing cleaning element 391A may extend from the side wall 310C or 310D parallel to one of the housing cleaning elements 221A, 231A, 241A or one of the carrier cleaning elements 311A, 321A. In the shown embodiment, elastomeric housing cleaning elements 391A extend on each side of the three rows of carrier cleaning elements 221A, 231A, and 241A, respectively.

As can be seen in Fig. 5B, the housing cleaning elements 311A may have an enlarged base 312A that may be partially embedded in the material of the bottom wall 320A and partially in the material of the outer layer 390A.

A closure element 350A maybe present, on which closure element 250A at least one auxiliary cleaning element 358A maybe mounted, in particular an elastomeric cleaning element that may be mounted onto the closure element 350A by means of an injection molding process (i.e. the auxiliary cleaning element 358A may then be made from a thermoplastic elastomer - TPE). The closure element 350Amay comprise a snap connector 354A by which the closure element 350A is snapped onto a snap projection 315A of the housing part 300A (see Fig. 5D).

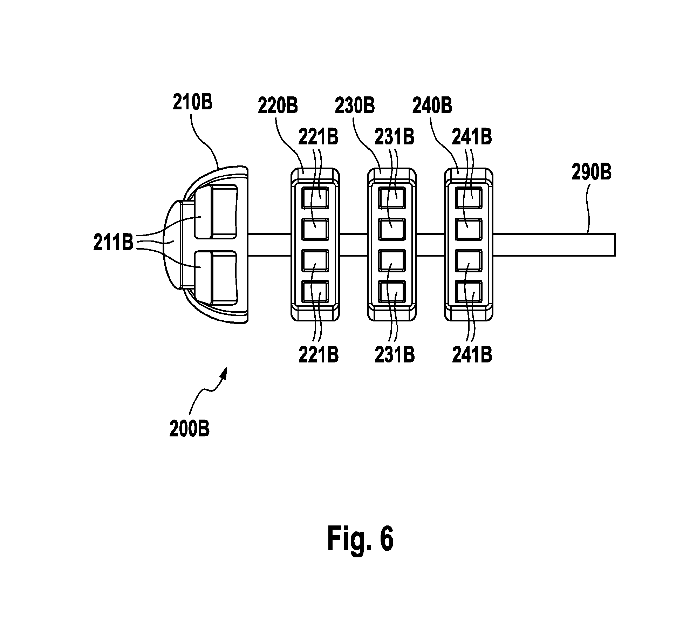

Fig. 6 is an isolated depiction of an example embodiment of a carrier assembly 200B. The carrier assembly 200B comprises here four consecutively carriers 210B, 220B, 230B, 240B and a connector element 290B, that maybe realized as a connector rod, in particular as a metal connector rod. The first carrier 210B is realized as a front carrier and thus an end of the connector element 290B is embedded in the material of the front carrier. The front carrier 210B comprises three carrier cleaning elements 211B that are inclined in forward direction. Each of the three further carriers 220B, 230B, and 240B comprises a row of four carrier cleaning elements 221B, 231B, and 241B, respectively.

It is stated here again that the number and location of the cleaning elements shown in the present example embodiments shall not be considered as limiting and the features of the oral hygiene implement shall each be considered as being disclosed independent from each other if not inherently connected. This also applies for the number and location of carriers of the carrier assembly.

A method of manufacturing an oral cleaning implement in accordance with the present disclosure comprises the following steps:
(1) providing a carrier assembly by injection molding at least two carriers around undercut sections of a connector element so that each carrier forms a non-detachable positive-fit connection with the connector element, whereby the carriers are arranged with a distance;
(2) providing a housing part, e.g. by a plastic injection molding process; the housing part may have a cavity for receiving the carrier assembly;
(3) mounting the carrier assembly at the housing part (it may be received in the cavity) such that the carrier assembly is borne for movement relative to the housing part.

The step (2) may include mounting at least one housing cleaning element at the housing part and the step (3) may include pushing the housing cleaning element in between two of the carriers that neighbor each other. Further additionally or alternatively, step (2) may include mounting at least two neighboring housing cleaning elements at the housing part and step (3) may include pushing the two housing cleaning elements apart from each other and moving a portion of the connector element in between the two housing cleaning elements. Additionally or alternatively, a further step (4) of connecting a closure element with the housing part, e.g. by means of gluing, welding, or snap-fitting, maybe present and the closure element may then cover a portion of the connector element. Optionally, the closure element and the housing part together form a bearing for the connector element. Further potential assembly steps have been described with respect to Figs. 1 to 6.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. An oral hygiene implement, in particular a replacement brush head, having a carrier assembly mounted at a housing part for movement relative to the housing part, which carrier assembly comprises:
at least two carriers arranged with a distance to each other; and
a connector element, in particular an elongated, shaft-like connector element, that extends parallel to a longitudinal axis of the oral hygiene implement, which connector element is connected with the at least two carriers;
wherein the connector element has undercut sections provided at the locations where the carriers are connected with the connector element and the carriers are plastic injection molded parts extending around the connector element so that the carriers are each non-detachably connected with the connector element by a positive fit connection.

2. The oral hygiene implement in accordance with claim 1, wherein the connector element is made from metal, in particular from a metal rod and optionally where the undercut sections are crimped or otherwise deformed portions of the connector element.

3. The oral hygiene implement in accordance with claim 1 or 2, wherein the carrier assembly has at least three carriers, in particular at least four carriers, that are consecutively arranged with respect to the longitudinal axis and with a distance between neighboring carriers.

4. The oral hygiene implement in accordance with claim 3, wherein the distance between at least two neighboring carriers measures in longitudinal direction less than about 5 mm, optionally less than about 2 mm, and in particular at least 0.5 mm, optionally at least 0.8 mm.

5. The oral hygiene implement in accordance with one of claims 1 to 4, wherein one of the carriers forms a front carrier arranged at a front region of the oral hygiene implement and the front carrier extends around an end of the connector element.

6. The oral hygiene implement in accordance with one of claims 1 to 5, wherein at least one of the carriers comprises at least one carrier cleaning element having an enlarged base section around which the injection molded carrier extends.

7. The oral hygiene implement in accordance with any one of claims 1 to 6, wherein the housing part has a cavity in which the carrier assembly is disposed.

8. The oral hygiene implement in accordance with any one of claims 1 to 7, wherein at least one housing cleaning element is mounted at the housing part, which housing cleaning element extends between two of the carriers, in particular wherein a width of the housing cleaning element is essentially equal to or slightly smaller than the distance between the two carriers.

9. The oral hygiene implement in accordance with the previous claim, wherein at least two housing cleaning elements are mounted at the housing part and extend between two of the carriers and the connector element extends between the two housing cleaning elements.

10. The oral hygiene implement in accordance with any one of claims 1 to 9, further comprising a closure element connected with the housing part, which closure element extends over a portion of the connector element, wherein optionally the closure element forms at least a portion of a bearing for the connector element.

11. The oral hygiene implement in accordance with the previous claim, wherein at least one auxiliary cleaning element is mounted on the closure element, optionally wherein the auxiliary cleaning element is an injection molded element such as an injection molded thermoplastic elastomer element.

12. A method of assembling an oral hygiene implement comprising the steps of:
providing a carrier assembly by injection molding at least two carriers around undercut sections of a connector element so that each carrier forms a non-detachable positive-fit connection with the connector element and the carriers are arranged with a distance;
providing a housing part in particular by a plastic injection molding process, optionally wherein the housing part has a cavity for receiving the carrier assembly;
mounting the carrier assembly at the housing part, in particular within the cavity, such that the carrier assembly is borne for movement relative to the housing part.

13. The method in accordance with the previous claim, wherein the step of providing the housing part includes mounting at least one housing cleaning element at the housing part and the step of mounting the carrier assembly includes pushing the housing cleaning element in between two of the carriers that neighbor each other.

14. The method in accordance with one of the two previous claims, wherein the step of providing the housing part includes mounting at least two neighboring housing cleaning elements at the housing part and the step of mounting the carrier assembly includes moving a portion of the connector element in between the two housing cleaning elements, optionally including the upfront step of pushing the two housing cleaning elements apart from each other.

15. The method in accordance with one of the three previous claims, further comprising the step of connecting a closure element with the housing part, in particular by means of gluing, welding, or snap-fitting, so that the closure element covers a portion of the connector element, optionally wherein the closure element is forming at least a portion of a bearing for the connector element.
